## Europäisches Patentamt
## European Patent Office
## Office européen des brevets

(19)

(11) Veröffentlichungsnummer: **0 001 966**
**B1**

(12) **EUROPÄISCHE PATENTSCHRIFT**

(45) Veröffentlichungstag der Patentschrift:
**12.08.81**

(51) Int. Cl.³: **B 23 D 37/16,** B 23 D 41/08

(21) Anmeldenummer: **78100732.3**

(22) Anmeldetag: **23.08.78**

(54) **Ziehmaschine.**

(30) Priorität: **12.11.77 DE 2750766**

(43) Veröffentlichungstag der Anmeldung:
**30.05.79 Patentblatt 79/11**

(45) Bekanntmachung des Hinweises auf die Patenterteilung:
**12.08.81 Patentblatt 81/32**

(84) Benannte Vertragsstaaten:
**BE CH FR GB SE**

(56) Entgegenhaltungen:
**US-A-2 896 514**
**US Zeitschrift CONTROL**
**ENGINEERING, Februar 1960**
**no. 2, Seite 82, heraus-**
**gegeben von TECHNICAL**
**PUBLISHING CO, Chicago**

(73) Patentinhaber: **Oswald Forst Maschinenfabrik und Apparatebauanstalt GmbH, Schützenstrasse 160, D-5650 Solingen 1 (DE)**

(72) Erfinder: **Esser, Gustav, Halfesweg 10, D-5650 Solingen (DE)**
Erfinder: **Holstein, Herbert, Mittelkatternberg 25, D-5650 Solingen (DE)**
Erfinder: **Birkenbeul, Karlheinz, Wolfstall 43, D-5653 Leichlingen 2 (DE)**

(74) Vertreter: **Rau, Manfred, Dr. Dipl.-Ing., Postfach 91 04 80 Lange Zeile 30, D-8500 Nürnberg 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Ziehmaschine

Die Erfindung betrifft eine Ziehmaschine zur Herstellung von Drallnuten in Rohren, bestehend aus einem Maschinenbett mit einem längsverschiebbar darauf geführten Ziehschlitten und aus Halterungseinrichtungen für das Rohr, wobei mit dem Ziehschlitten ein Ziehwerkzeug axial fest verbindbar ist, das mittels eines Stellmotors während des Ziehvorganges entsprechend dem gewünschten Drall der Drallnuten um in Abhängigkeit von dem Hubweg des Ziehschlittens vorgegebene Soll-Drehwinkel drehbar ist, wobei zur Ansteuerung des Stellmotors ein Drehwinkelstellungs-Regelkreis vorgesehen ist.

Aus der US-A-2 896 515 ist eine Ziehmaschine der gattungsgemäßen Art bekannt, bei der der Stellmotor für die Drehung des Ziehwerkzeuges über einen Rechner angesteuert wird, der die Drehungen des Stellmotors und damit die Drehungen des Ziehwerkzeuges aus einer vorgegebenen Gleichung errechnet, wobei sich die Verstellkurve aus — wenn auch verhältnismäßig kurzen — geradlinigen Kurvenstücken zusammensetzt. Auch bei dieser bekannten Ziehmaschine, die ebenfalls insbesondere zur Herstellung von Drallnuten in Geschützrohren dient, treten geschwindigkeitsabhängige Schlepp- oder Nachlauffehler auf. Das Ergebnis ist, daß die Drallnuten, zu deren Erzeugung jeweils viele Ziehvorgänge erforderlich sind, hinsichtlich ihres Querschnittes und ihres Verlaufs nicht immer wieder identisch sind.

Aus der Zeitschrift »CONTROL ENGINEERING«, Februar 1960, Nr. 2, Seite 82, ist eine Ziehmaschine zur Herstellung von Drallnuten in Rohren bekannt, bei der die Drehung des Ziehwerkzeuges durch eine Kopierbewegung von einem Kurvenstück erzeugt wird, wobei ein Kraftverstärker zur Verstärkung der von der Kopierkurve erzeugten Verstellkraft vorgesehen ist. Es handelt sich also um ein einfaches Kopierverfahren, wobei lediglich eine Verstärkung der von der Kopierschablone abgenommenen Verstellkraft vorgenommen wird.

Der Erfindung liegt daher die Aufgabe zugrunde, eine Ziehmaschine der eingangs angegebenen Art so auszugestalten, daß hinsichtlich ihres Querschnittes und ihres Verlaufs immer gleichbleibende Drallnuten erzeugt werden können.

Diese Aufgabe wird erfindungsgemäß dadurch gelöst, daß ein dem Drehwinkelstellungs-Regelkreis überlagerter Drehwinkelgeschwindigkeits-Regelkreis zur Ansteuerung des Stellmotors vorgesehen ist, daß zur Vorgabe des Soll-Drehwinkels eine im Ziehschlitten gelagerte Kurvenscheibe vorgesehen ist, die über eine etwas längs des Hubweges des Ziehschlittens am Maschinenbett angebrachte Präzisionszahnstange und ein in diese eingreifendes, mit der Kurvenscheibe gekoppeltes Zahnradgetriebe drehantreibbar ist, daß eine Einrichtung zum Umsetzen der Durchmesseränderungen der Kurvenscheibe in eine Drehbewegung vorgesehen ist, und daß mit der Einrichtung zum Umsetzen der Durchmesseränderungen der Kurvenscheibe in eine Drehbewegung eine Drehwinkelmeßeinrichtung als Drehwinkelstellungs-Sollwertgeber und ein Tacho-Generator als Drehwinkelgeschwindigkeits-Sollwertgeber drehfest gekoppelt sind, denen in den Regelkreisen jeweils entsprechend eine Drehwinkelmeßeinrichtung als Drehwinkelstellungs-Istwertgeber und ein Tacho-Generator als Drehwinkelgeschwindigkeits-Istwertgeber zugeordnet sind, die mit dem Stellmotor drehfest gekoppelt sind. Dadurch, daß der Stellmotor von einem Drehwinkelstellungs-Regelkreis angesteuert wird, wird erreicht, daß grundsätzlich der Drall einem vorgegebenen Sollwert entspricht. Damit der bei ausschließlichem Einsatz eines solchen Regelkreises auftretende geschwindigkeitsproportionale Nachlauffehler ausgeglichen wird, ist noch ein weiterer Regelkreis vorgesehen, der dafür sorgt, daß auch die Drehwinkelgeschwindigkeiten, also die Änderungen der Drehwinkel über der Zeit, stets gleich sind. Damit wird erreicht, daß der Stellmotor drehwinkelgleich und drehzahlgleich zu den vorgegebenen Sollwert-Größen angetrieben wird.

Weitere Vorteile und Merkmale der Erfindung ergeben sich aus der Beschreibung eines Ausführungsbeispiels anhand der Zeichnung. In der Zeichnung zeigt

Fig. 1 eine Ziehmaschine in einer Seiten-Längs-Ansicht in stark schematisierter Darstellung,

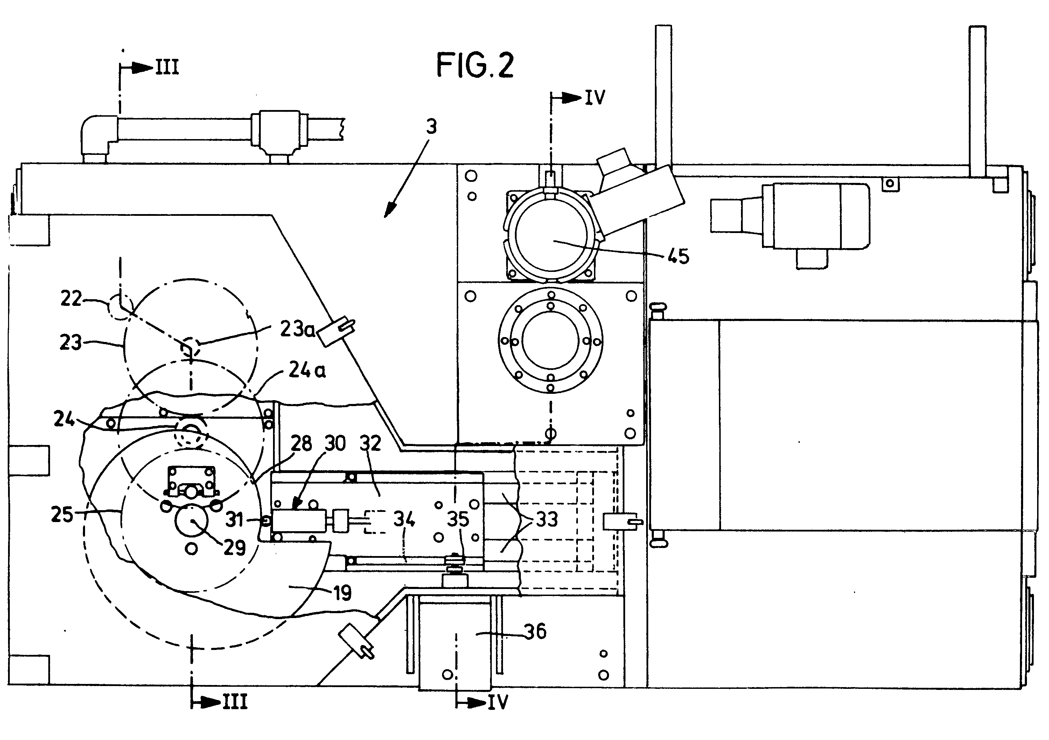

Fig. 2 eine Draufsicht auf einen Teil der Ziehmaschine gemäß den Sichtpfeilen II-II in Fig. 1,

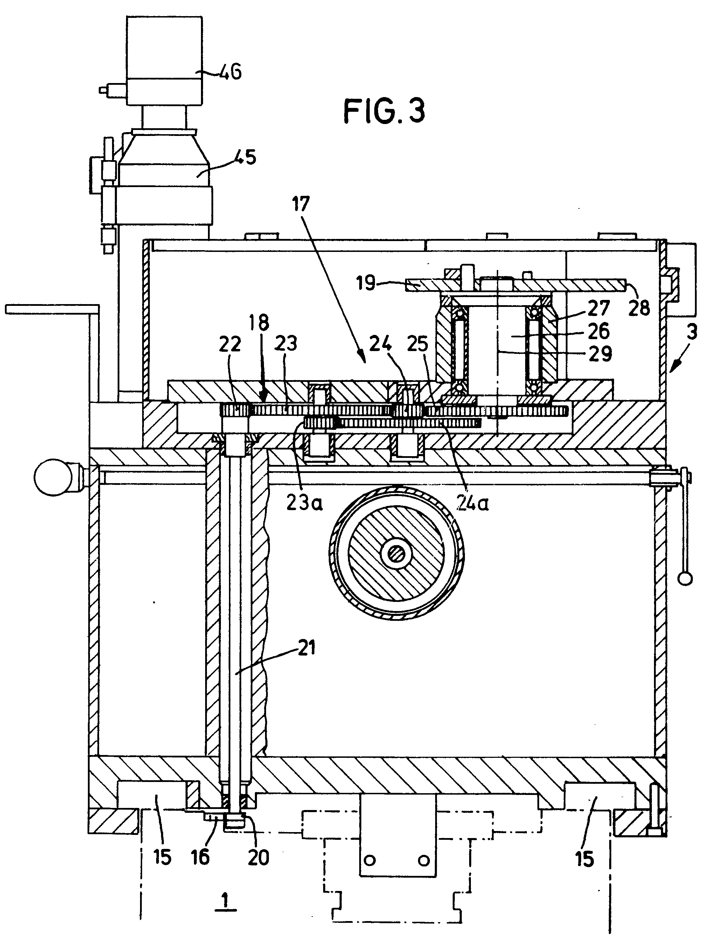

Fig. 3 einen Vertikal-Querschnitt durch die Ziehmaschine gemäß der Schnittlinie III-III in Fig. 2 in stark vergrößertem Maßstab,

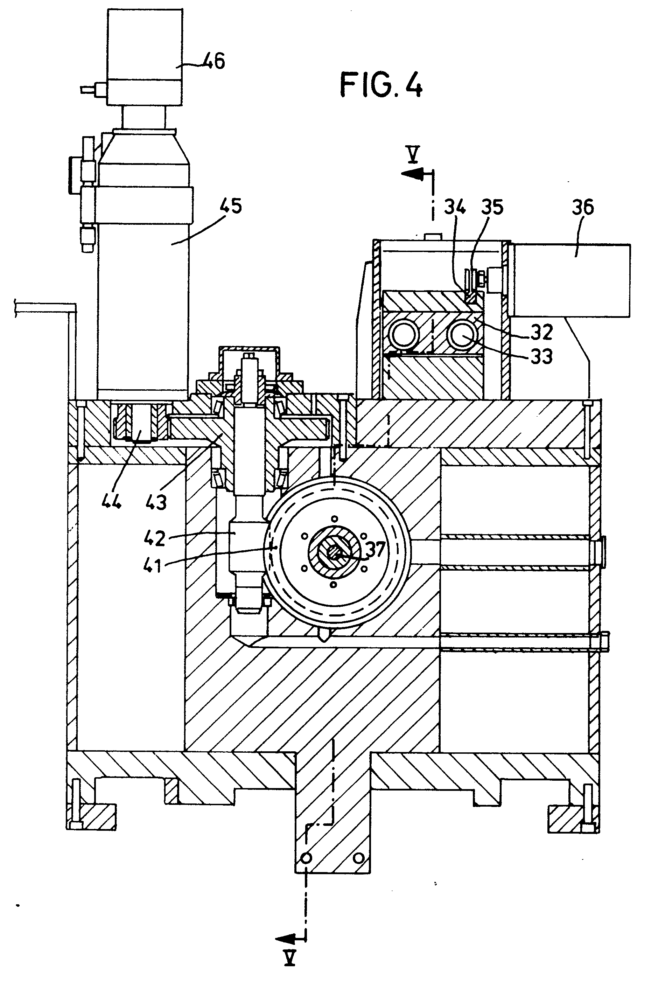

Fig. 4 einen Vertikal-Querschnitt durch die Ziehmaschine gemäß der Schnittlinie IV-IV in Fig. 2, ebenfalls in stark vergrößertem Maßstab,

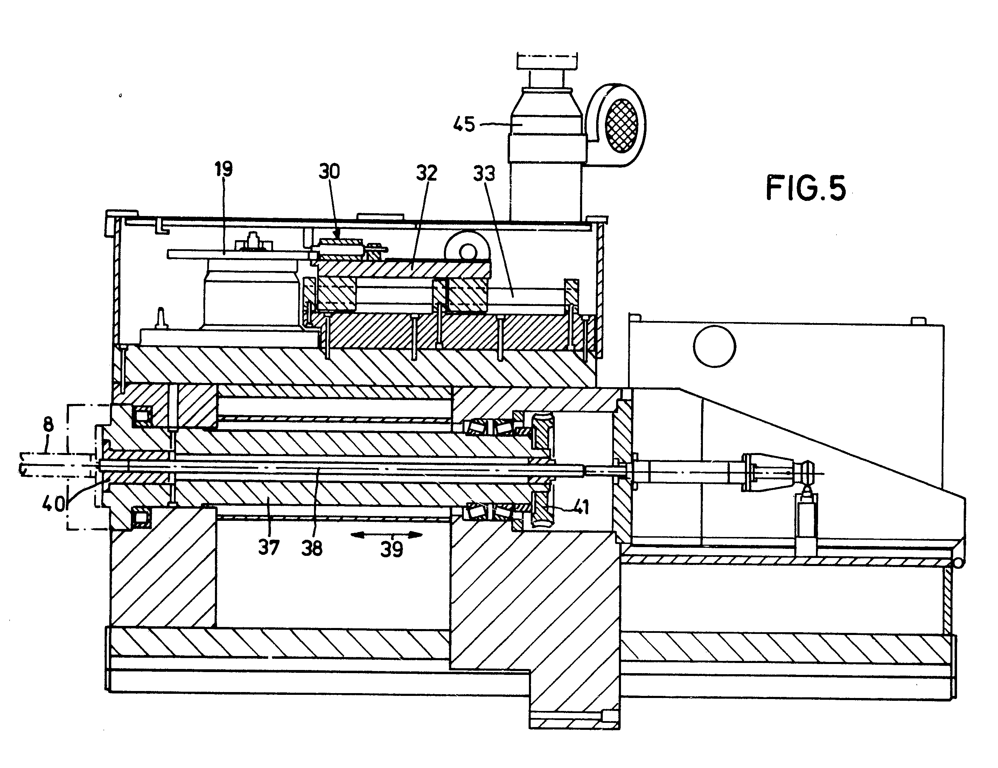

Fig. 5 einen Vertikal-Längs-Schnitt gemäß der Schnittlinie V-V in Fig. 4 und

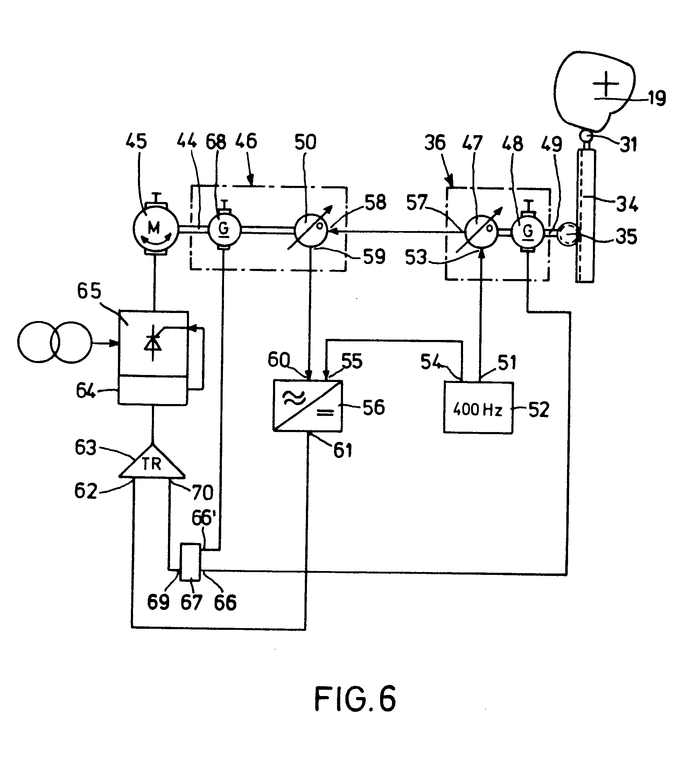

Fig. 6 ein Schaltungsschema für eine Regelung.

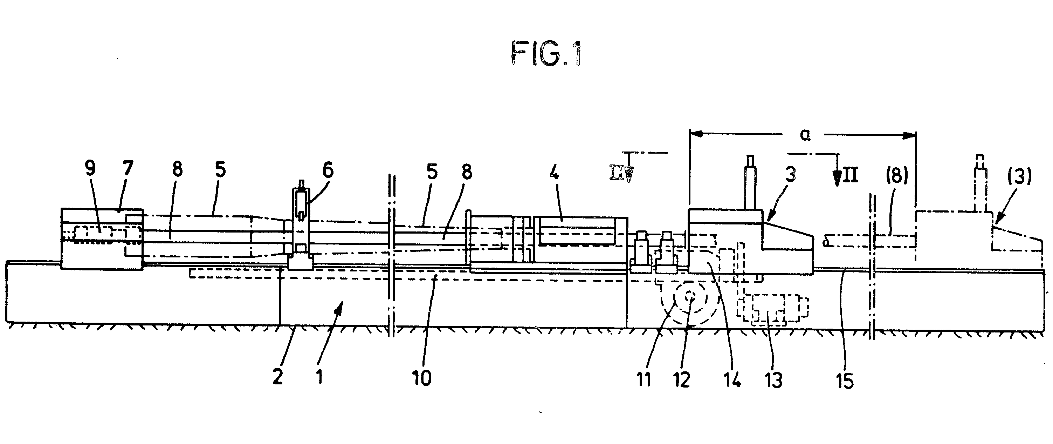

Auf einem Maschinenbett 1, das auf einem Fundament 2 aufruht, ist längsverschiebbar ein Ziehschlitten 3 angeordnet, der von der in Fig. 1 dargestellten Ausgangslage über einen Weg a, von beispielsweise 12 Meter, bis in die Nähe eines — in Fig. 1 rechten — Endes des Maschinenbettes 1 verschiebbar ist. Auf dem Maschinenbett 1 ist weiterhin ortsfest ein Spannbock 4 angebracht, der zum Einspannen eines Rohres 5 (Werkstück) dient. Dieser Spannbock 4 befindet sich in der in Fig. 1 dargestellten Ausgangslage des Ziehschlittens 3, in dessen Nähe, und zwar auf seiner dem Verschiebeweg des Ziehschlittens 3 abgewandten Seite. Vom Ziehschlitten 3 aus gesehen befinden sich jenseits des Spannbocks 4 auf dem Maschinenbett 1 noch ein oder mehrere Setzstöcke 6, auf dem oder denen das Rohr 5 abgestützt wird. Jenseits des oder der Setzstöcke 6 ist ein Spänefangkasten 7 auf dem Maschinenbett 1 angeordnet, in dem das Rohr 5 endet. Um Anpassungen an unterschiedliche Längen von Rohren 5 vornehmen zu können, sind der oder die Setzstöcke 6 und der Spänefangkasten 7 in üblicher Weise auf dem Maschinenbett 1 längsverschiebbar, aber für eine bestimmte Rohrlänge feststellbar.

Im Ziehschlitten 3 kann eine Ziehstange 8 mit ihrem einen Ende eingespannt werden, an deren anderem Ende sich ein Ziehkopf 9, also das eigentliche Ziehwerkzeug, befindet. Dieses Ziehwerkzeug wird bei einer Bewegung des Ziehschlittens 3 von der in Fig. 1 dargestellten Ausgangslage bis zu der entsprechenden — in Fig. 1 am rechten Ende befindlichen — Endstellung über den Hubweg a durch das Rohr 5 unter Erzeugung von der Form des Ziehwerkzeuges entsprechenden Nuten gezogen. Wenn der Spannbock 4 gleichzeitig als Abteileinrichtung ausgebildet ist, kann das Rohr 5 nach dem Ziehen von ein oder mehreren Nuten um einen vorgegebenen Winkel gedreht werden, so daß eine Vielzahl von Nuten im Rohr 5 hergestellt werden kann. Insoweit sind derartige Ziehmaschinen im Prinzip bekannt.

Der Antrieb des Ziehschlittens 3 erfolgt über eine Zahnstange 10, die an ihrer Unterseite mit einer nicht dargestellten Schrägverzahnung versehen ist, und die mit ihrem einen — in Fig. 1 rechten — Ende mit dem Ziehschlitten 3 verbunden ist. Axiale Verschiebungen der Zahnstange 10 und damit des Ziehschlittens 3 erfolgen über ein mit einer entsprechenden Verzahnung in die Verzahnung der Zahnstange 10 eingreifendes Antriebsritzel 11, das auf einer im Maschinenbett 1 gelagerten Antriebswelle 12 drehfest angebracht ist.

Der Antrieb der Antriebswelle 12 erfolgt mittels eines an der Außenseite des Maschinenbettes 1 angebrachten Antriebsmotors 13 und eines Schnecken-Stirnrad-Getriebes 14. Der Ziehschlitten 3 ist auf Führungen 15 des Maschinenbettes 1 abgestützt.

Parallel zu den Führungen 15 des Ziehschlittens 3 ist am Maschinenbett 1 eine Präzisionszahnstange 16 über dem Hubweg a angebracht, von der bei Bewegungen des Ziehschlittens 3 ein in letzterem angeordnetes spielfreies Zahnradgetriebe 17 angetrieben wird. Von diesem Zahnradgetriebe 17 wird eine Kurvenscheibe 19 angetrieben, die also eine dem Längsvorschub des Ziehschlittens 3 aus seiner in Fig. 1 dargestellten Ausgangslage in seine in Fig. 1 gestrichelt dargestellte Endlage proportionale Drehbewegung ausführt. Einem Längsvorschub des Ziehschlittens 3 um ein bestimmtes Längenmaß entspricht also eine bestimmte, von der Dimensionierung des Zahnradgetriebes 17 abhängige Winkeldrehung der Kurvenscheibe 19.

Das Zahnradgetriebe 17 besteht aus einem in die Präzisionszahnstange 16 eingreifenden Ritzel 20, das auf einer Welle 21 drehfest befestigt ist, die wiederum im Ziehschlitten 3 vertikal angeordnet und drehbar gelagert ist. Am anderen Ende der Welle 21 ist ein Zahnrad 22 drehfest angebracht, das in ein weiteres Zahnrad 23 eingreift. Mit dem Zahnrad 23 ist wiederum achsgleich und drehfest ein Ritzel 23a verbunden, das wiederum in ein Zahnrad 24a eingreift. Mit diesen ist achsgleich und drehfest ein Ritzel 24 verbunden, welches in ein drehfest mit der Kurvenscheibe 19 verbundenes Zahnrad 25 eingreift. Dieses letzte Zahnrad 25 ist am einen Ende eines Wellenstumpfes 26 angebracht, der in einem entsprechenden Lagerbock 27 des Ziehschlittens gelagert ist. Am anderen Ende des Wellenstumpfes 26 ist die Kurvenscheibe 19 befestigt.

Um den maximal möglichen Drehwinkel der Kurvenscheibe 19 von beispielsweise etwa 320 bis 340° auch bei kleineren Hubwegen voll ausnutzen zu können — wenn also kürzere Rohre 5 zu bearbeiten sind — kann eine aus den Zahnrädern 22 und 23 bestehende erste Getriebestufe 18 des Zahnradgetriebes 17 ausgewechselt werden, um eine entsprechende Änderung des Übersetzungsverhältnisses herbeizuführen.

An der die Kurve 28 bildenden Außenkontur der Kurvenscheibe 19 liegt eine radial zur Drehachse 29 verschiebbare Tasteinheit 30 mit einer Tastrolle 31 an, deren lineare Verschiebung bei Drehbewegungen der Kurvenscheibe auf einen Tastschlitten 32 übertragen werden. Dieser Tastschlitten 32 ist auf Führungsstangen 33 längsverschiebbar geführt. Auf dem Tastschlitten 32 ist eine Zahnstange 34 angebracht, in die ein Ritzel 35 eingreift, das drehfest auf der Welle eines Meßwertgebers 36 angebracht ist.

Im Ziehschlitten 3 ist eine Welle 37 axial unverschiebbar, aber drehbar, gelagert, deren Achse 38 in der Bewegungsrichtung 39 des Ziehschlittens 3 verläuft. Diese Welle 37 weist an ihrem dem Spannbock 4 benachbarten Ende einen Flansch 40 auf, an dem die Ziehstange 8 befestigbar ist. Am anderen Ende ist an der Welle 37 drehfest ein Schneckenrad 41 angebracht, in das eine Schnecke 42 eingreift, die über einen Zahntrieb 43 mit der Welle 44 eines Gleichstrom-Stellmotors 45 verbunden ist, der ebenfalls am Ziehschlitten 3 angeflanscht ist. Mittels dieses Stellmotors 45 wird während der Ziehbewegung des Ziehschlittens die Welle 37 und damit die Ziehstange 8 und deren Ziehkopf 9 gedreht, so daß die in dem Rohr 5 erzeugten Nuten entsprechend dieser Drehbewegung einen konstanten oder progressiven Drall bekommen. Mit der Welle 44 des Stellmotors 45 ist ein Meßwertgeber 46 drehfest verbunden.

Die Ansteuerung des Stellmotors 45 in Abhängigkeit von der Stellung des Ziehschlittens 3 und damit in Abhängigkeit von der Winkelstellung der Kurvenscheibe 19 geht wie folgt vor sich: Der Meßwertgeber 36 weist eine Drehwinkelmeßeinrichtung 47 und einen Tacho-Generator 48 auf, die beide fest auf der das Ritzel 35 tragenden Welle angebracht sind. In dem Meßwertgeber 46 ist ebenfalls eine Drehwinkelmeßeinrichtung 50 angeordnet, die fest mit der Welle 44 des Stellmotors 45 gekoppelt ist. Die beiden handelsüblichen Drehwinkelmeßeinrichtungen 47, 50 sind in üblicher Weise nach Art einer elektrischen Welle miteinander gekoppelt. Hierzu wird von einem Ausgang 51 eines Frequenzgenerators 52 eine Frequenz von beispielsweise 400 Hz auf einen Eingang 53 der Drehwinkelmeßeinrichtung 47 gegeben, der beispielsweise deren Rotor zugeordnet ist. Von einem zweiten Ausgang 54 des Frequenzgenerators 52 wird die gleiche Frequenz auf einen Eingang 55 eines Vergleichers 56 gegeben. Ein — in diesem Fall dem Stator zugeordneter — Ausgang 57 der Drehwinkelmeßeinrichtung 47 ist auf ein ebenfalls dem Stator zugeordneten Eingang 58 der Drehwinkelmeßeinrichtung 50 geschaltet. Deren ihrem Rotor zugeordneter Ausgang 59 ist auf einen zweiten Eingang 60 des Vergleichers 56 geschaltet. Wenn die Winkelstellungen der Rotoren der beiden Drehwinkelmeßeinrichtungen 47, 50 nicht gleich sind, wenn also der durch die Kurvenscheibe 19 vorgegebene Winkel-Sollwert der Ziehstange 8 von dem Winkel-Istwert der Ziehstange 8 abweicht, dann tritt eine Phasen-Abweichung an den beiden Eingängen 55, 60 des als Winkelvergleicher dienenden Vergleichers 56 auf, was zu einem Signal am Ausgang 61 des Winkel-Vergleichers 56 führt. Je nachdem, ob die Differenz zwischen Soll- und Ist-Winkel positiv oder negativ ist, ist dieses Signal positiv oder negativ. Dieses die Winkelabweichung repräsentierende Signal wird vom Ausgang 61 des Winkel-Vergleichers 56 auf einen Eingang 62 eines Steuerverstärkers 63 gegeben, der wiederum einen Zündimpulsgeber 64 einer Thyristorleistungsstufe 65 ansteuert. Der Zündimpulsgeber 64 verschiebt den Zündzeitpunkt der Thyristorleistungsstufe 65 entsprechend, so daß diese eine vom Nennwert abweichende höhere oder geringere Leistung an den Stellmotor 45 abgibt. Durch diese Regelung wird sichergestellt, daß die Winkellage der Ziehstange stets der durch die Kurvenscheibe vorgegebenen Soll-Winkellage entspricht. Hierbei tritt ein Nachlauffehler auf, der proportional der Änderung der Winkelgeschwindigkeit ist. Dieser Fehler ist also um so größer, je größer die Änderung der Winkelgeschwindigkeit ist, mit der die Drehwinkelmeßeinrichtung 47 angetrieben wird. Dieser geschwindigkeitsproportionale Nachlauffehler ist also besonders groß beim Anfahren des Ziehschlittens aus seiner in Fig. 1 links dargestellten Ruhelage und dann, wenn zur Erzeugung von Drallnuten mit progressivem Drall die Änderung $\Delta R$ des Radius R der Kurvenscheibe über einer Winkeländerung $\Delta\varphi$ nicht konstant ist. Weiterhin ist dieser Nachlauffehler naturgemäß um so größer, je größer die Hubgeschwindigkeit des Ziehschlittens 3 ist.

Um diesen geschwindigkeitsproportionalen Nachlauffehler auszugleichen, wird die Hubgeschwindigkeit der Tasteinheit 30, d. h. die Änderung $\Delta R$ des Radius R der Kurvenscheibe 19 über der Zeit $\Delta t$ mittels des Tachogenerators 48 des Meßwertgebers 36 als Drehzahl-Sollwert auf einen Eingang 66 eines Drehzahl-Vergleichers 67 aufgegeben. In der Drehwinkelmeßeinrichtung 50 ist weiterhin ein mit der Welle 44 des Stellmotors 45 gekoppelter Tacho-Generator 68 vorgesehen, der ein die Ist-Drehzahl des Stellmotors repräsentierendes Signal auf einen Eingang 66' des Drehzahl-Vergleichers 67 aufgibt. Bei einer Differenz zwischen der Soll-Drehzahl und der Ist-Drehzahl gibt der Drehzahl-Vergleicher ebenfalls an seinem Ausgang 69 ein Signal auf einen zweiten Eingang 70 des Steuerverstärkers 63. Auch dieses Signal ist gleichermaßen wie bei dem Winkelstellungs-Vergleicher 56 je nach Art der Drehzahlabweichung positiv oder negativ. Bei Drehzahlabweichungen wird dann die Thyristorleistungsstufe in gleicher Weise wie bei Signalen von dem Winkelstellungs-Vergleicher 56 angesteuert. Dadurch wird der geschwindigkeitsproportionale Nachlauffehler praktisch Null.

## Patentanspruch

Ziehmaschine zur Herstellung von Drallnuten in Rohren, bestehend aus einem Maschinenbett (1) mit einem längsverschiebbar darauf geführten Ziehschlitten (3) und aus Halterungseinrichtungen für das Rohr (5), wobei mit dem Ziehschlitten (3) ein Ziehwerkzeug axial fest verbindbar ist, das mittels eines Stellmotors (45) während des Ziehvorganges entsprechend dem gewünschten Drall der Drallnuten um in Abhängigkeit von dem Hubweg (a) des Ziehschlittens (3) vorgegebene Soll-Drehwinkel drehbar ist, wobei zur Ansteuerung des Stellmotors (45) ein Drehwinkelstellungs-Regelkreis vorgesehen ist, dadurch gekennzeichnet, daß ein dem Drehwinkelstellungs-Regelkreis überlagerter Drehwinkelgeschwindigkeits-Regelkreis zur Ansteuerung des Stellmotors (45) vorgesehen ist, daß zur Vorgabe des Soll-Drehwinkels eine im Ziehschlitten (3) gelagerte Kurvenscheibe (19) vorgesehen ist, die über eine etwa längs des Hubweges (a) des Ziehschlittens (3) am Maschinenbett (1) angebrachte Präzisionszahnstange (16) und ein in diese eingreifendes, mit der Kurvenscheibe (19) gekoppeltes Zahnradgetriebe (17) drehantreibbar ist, daß eine Einrichtung zum Umsetzen der Durchmesseränderungen der Kurvenscheibe in eine Drehbewegung vorgesehen ist, und daß mit der Einrichtung zum Umsetzen der Durchmesseränderungen der Kurvenscheibe (19) in eine Drehbewegung eine Drehwinkelmeßeinrichtung (47) als Drehwinkelstellungs-Sollwertgeber und ein Tacho-Generator (48) als Drehwinkelgeschwindigkeits-Sollwertgeber drehfest gekoppelt sind, denen in den Regelkreisen jeweils entsprechend eine Drehwinkelmeßeinrichtung (50) als Drehwinkelstellungs-Istwertgeber und ein Tacho-Generator (68) als Drehwinkelgeschwindigkeits-Istwertgeber

zugeordnet sind, die mit dem Stellmotor (45) drehfest gekoppelt sind.

## Claim

Drawing machine for making twisted flutes in tubes, consisting of a machine bed (1) with a drawing carriage (3) guided longitudinally displaceably thereon and of retaining devices for the tube (5), in which drawing machine a drawing tool can be connected axially fixedly to the drawing carriage (3), said drawing tool being rotatable by means of a servo-motor (45), during the drawing operation, through a nominal angle of rotation determined as a function of the length of stroke (a) of the drawing carriage (3), according to the desired twist of the twisted flutes, a control loop for position of the angle of rotation being provided to control the servo-motor (45), characterised in that a control loop for the velocity of the angle of rotation, which is superimposed on the control loop for the position of the angle of rotation, is provided, in that there is provided, to preset the nominal angle of rotation, a cam disc (19) which is mounted in the drawing carriage (3) and which can be driven to rotate by means of a precision rack (16) attached to the machine bed (1) approximately along the length of stroke (a) of the drawing carriage (3) and by means of a toothed gearing (17) which engages into said rack and which is coupled to the cam disc (19), in that a device to convert the changes in diameter of the cam disc into a rotary movement is provided, and in that there are coupled in a manner proof against rotation to the device for converting the changes in diameter of the cam disc (19) into a rotary movement a device (47) for measuring the angle of rotation, as a nominal value setter for the position of the angle of rotation, and a tachogenerator (48), as a nominal value setter for the velocity of the angle of rotation, to which there are assigned respectively, in the control loops, a device (50) for measuring the angle of rotation, as an actual-value setter for the position of the angle of rotation, and a tacho-generator (68), as an actual-value setter for the velocity of the angle of rotation, these being coupled to the servo-motor (45) in a manner proof against rotation.

## Revendication

Machine d'étirage pour la réalisation de rayures hélicoïdales dans des tubes, comportant un socle de machine (1) avec, guidé longitudinalement sur celui-ci, un chariot d'étirage (3), et avec des dispositifs de maintien pour le tube (5), un outil d'étirage étant susceptible d'être relié avec fixité axiale au chariot d'étirage (3), cet outil pouvant être tourné au moyen d'un moteur de positionnement (45), pendant le processus d'étirage, suivant l'inclinaison désirée pour les rayures, d'un angle de rotation de consigne prescrit en dépendance de la course du chariot d'étirage (3), un circuit de réglage du positionnement en angle de rotation étant prévu pour la commande du moteur de positionnement (45), caractérisée en ce qu'on a prévu, en superposition au circuit de réglage du positionnement en angle de rotation, un circuit de réglage de la vitesse de rotation angulaire pour la commande du moteur de positionnement (45); en ce que, pour prescrire l'angle de rotation de consigne, on a prévu, monté dans le chariot d'étirage (3), un plateau à came (19) qui, par l'intermédiaire d'une crémaillère de précision (16) adaptée au socle (1) de la machine sur à peu près la longueur (a) de la course du chariot d'étirage (3) et d'une transmission à roues dentées (17) en prise avec cette crémaillère et accouplée au plateau à came (19), peut être entraîné en rotation; en ce qu'on a prévu un dispositif pour la transformation des changements de diamètre du plateau à came en un mouvement de rotation et en ce qu'avec le dispositif pour transformer les changements de diamètre du plateau à came (19) en un mouvement de rotation, sont accouplés solidairement en rotation une installation de mesure d'angle de rotation (47) comme indicateur de valeur de consigne de positionnement en angle de rotation, et un générateur tachymétrique (48) comme indicateur de valeur de consigne de la vitesse de rotation angulaire, auxquels sont associés, de façon convenable chaque fois, dans les circuits de réglage, une installation de mesure d'angle de rotation (50) comme indicateur de valeur réelle de positionnement en angle de rotation et un générateur tachymétrique (68) comme indicateur de valeur réelle de la vitesse de rotation angulaire, qui sont accouplés solidairement en rotation avec le moteur de positionnement (45).

# FIG.2

0 001 966

# FIG.3

# FIG. 4

FIG.5

FIG.6